(19) **Europäisches Patentamt**

**European Patent Office**

**Office européen des brevets**

(11) **EP 0 701 144 A1**

(12) **EUROPEAN PATENT APPLICATION**

(43) Date of publication:
13.03.1996 Bulletin 1996/11

(51) Int. Cl.$^6$: **G01S 7/36**, G01S 7/02

(21) Application number: **95113993.0**

(22) Date of filing: **06.09.1995**

(84) Designated Contracting States:
**DE FR GB IT**

(30) Priority: **06.09.1994 US 301097**

(71) Applicant: **ROCKWELL INTERNATIONAL CORPORATION**
**Seal Beach, CA 90740-8250 (US)**

(72) Inventors:
• **Hsu, Yuan S.**
**Rolling Hills Estates, California 90274 (US)**

• **Laquer, Andrew G.**
**Tustin, California 92680 (US)**
• **Waineo, Douglas K.**
**Placentia, California 92670 (US)**

(74) Representative: **Wagner, Karl H. et al**
**WAGNER & GEYER**
**Patentanwälte**
**Gewürzmühlstrasse 5**
**D-80538 München (DE)**

(54) **Radar terrain bounce jamming detector**

(57) A radar jamming detection system (100) is suitable for recognizing and distinguishing the presence of jamming and, particularly, terrain bounce jamming. The radar system (100) includes a transmitter (118) for transmitting signals (110) associated with a predetermined polarization vector, and a receiver (112) having multiple input channels (122, 124) which enable the receiver (112) to receive signals associated with at least two polarization vectors, e.g., vertical and horizontal polarizations. A computer (120) is implemented within the radar system (100) for evaluating the received signals according to their polarizations. If the received signals have a polarization other than that transmitted, the computer (120) may determine that the signals are jamming signals transmitted by a jammer (108). If the polarization phase differences between the received signals appear to be random, it may be concluded that terrain bounce jamming is present.

FIG. 1

EP 0 701 144 A1

# Description

## BACKGROUND OF THE INVENTION

### 1. Field of the Invention

This invention relates to the detection and recognition of radar jamming, and particularly to the detection of terrain bounce jamming.

### 2. Description of the Related Art

Radar systems typically operate by transmitting electromagnetic energy, or signals, at selected polarization angles. These outgoing signals, for example, may be linearly polarized, e.g., vertically or horizontally. Depending upon the number and size of objects located within the radar environment, some of the signals will bounce off the objects and will be reflected back to the radar receiver. These signals define the object being detected, and thus comprise the "radar skin return" which is reflected off of the skin, or surface, of the detected object.

To mask the radar skin return, and thereby deter or avoid radar detection, certain electronic countermeasures have-been developed. Active electronic or electromagnetic warfare operates by generating energy, in the form of noise, to deny effective operation of an enemy's electromagnetic sensors. This energy may be in the form of false or time-delayed signals which can deceive radio or radar devices and their operators. Noise and deception jamming techniques are common forms of electronic warfare countermeasures which operate on the characteristics of the initial electronic or electromagnetic power levels or frequencies. Noise jamming, for example, is the intentional generation of interfering signals which are Intended to block a communication or radar system, or at least to impair its effectiveness. Typically, the jamming beam comprises a more powerful signal than the signal being jammed.

A variety of jammers are used today. One jamming technique is direct signal, or direct path, jamming in which an electromagnetic beam of greater amplitude than the jammed signal is transmitted toward the victim radar within the same frequency band as the signal being jammed. By using carefully selected noise modulation, substantial impairment of the intelligibility of reception of the incoming signal may be attained. To counter direct noise jamming, a radar may use a counter technique, called home-on jamming (HOJ), to track the angle of the jammer signal, However, because the home-on jammer will home in on a reflected signal, it has been found that HOJ is ineffective against a terrain bounce jammer.

Terrain bounce jamming, in contrast to direct signal jamming, is used to provide a jamming signal from an angle different from the true jammer angle, and thus is generally more difficult to counter. The noise terrain bounce jammer presents a false target angle to the seeker, and therefore directs the missile interceptor away from the true target. A terrain bounce jammer may be implemented on an aircraft, missile, or other air or ground-based devices. It is especially effective if the jammer is flying at a low altitude and transmits a noise-like continuous waveform toward the ground.

Thus, it can be seen that to counter the effects of terrain bounce jamming and, therefore, detect and intercept the real target, HOJ has been found to be ineffective for counterjamming. Using conventional HOJ, the seeker will determine, albeit incorrectly, that the target is located at some point on the ground from which the jamming signals appear to be reflected. As a result, the seeker will direct itself to hit the ground, rather than the real target. Thus, a detection and recognition scheme which can recognize the occurrence of terrain bounce jamming is desired.

## SUMMARY OF THE INVENTION

Accordingly, it is an object of the present invention to provide a system and method of detecting, recognizing and defeating continuous broadband noise terrain bounce jamming. In particular embodiments, the present invention is directed to a device and method for enabling a counterjamming radar system to recognize the presence of terrain bounce jamming signals. The radar may be included on a missile seeker or aircraft.

These and other objects are accomplished, according to an embodiment of the present invention, by a detection system and technique utilizing polarimetric calculations to compare the polarization vectors of incoming signals, thereby initially determining whether a received signal is being transmitted by a jammer. The present invention relates to the recognition, differentiation, and separation of terrain or ground-bounce jamming signals which have been transmitted to present false target returns to a homing missile or other radar-guided device. More particularly, embodiments of the invention include a plurality of receivers, a transmitter, and at least one antenna. These components may be mounted on a seeker or air-based device.

The receiver, transmitter, and antenna arrangement provide standard radar functions, yet also enable the detection system to detect and identify returning signals which are not true reflections of the signals originally transmitted by the system itself. A computer is implemented and programmed with logic to analyze the polarization characteristics of the received signals. The polarization vectors of the received signals allow the radar to determine whether the returning signal is a direct reflection of the signal which was originally transmitted. Consequently, the system can conclude that jamming signals are being transmitted and, more particularly, that terrain bounce jamming is being performed. Thus, If the computer recognizes that the polarization vectors of the incoming signals are not substantially the same as the outgoing signals, it will conclude that it is being jammed, and can immediately determine the specific type of jamming, e.g., direct path or terrain bounce, and can then choose an optimal solution to counter the jamming.

## BRIEF DESCRIPTION OF THE DRAWINGS

The detailed description will be made with reference to the accompanying drawings, wherein like numerals designate corresponding parts in the several figures.

Figure 1 is a pictorial representation of the detection operation of an embodiment of the present invention.

Figure 2 is a block diagram of an embodiment of the present invention.

Figure 3 is a flow chart describing the sequence of signal reception, detection, and recognition of preferred embodiments of the present invention.

## DETAILED DESCRIPTION OF THE PREFERRED EMBODIMENTS

The following detailed description is not to be taken in a limiting sense, but is made merely for the purpose of illustrating the general principles of embodiments of the invention.

Embodiments of the invention have been found to provide improved jamming recognition and identification capabilities in a radar system. In described embodiments of the invention, the radar may be included within a missile seeker, or other types of homing missile. It will be recognized, however, that embodiments of the present invention may also be incorporated within many different types of signal detection, recognition, and tracking arrangements. For example, embodiments of the invention may be mounted on commercial or military aircraft for identifying all incoming radar signals. Preferred embodiments of the present invention enable immediate discrimination and recognition of particular types of jamming signals, such as terrain bounce jamming signals. Consequently, the homing radar can conclude that a jammer is present and can begin procedures to reacquire the desired radar skin return of the true, desired target.

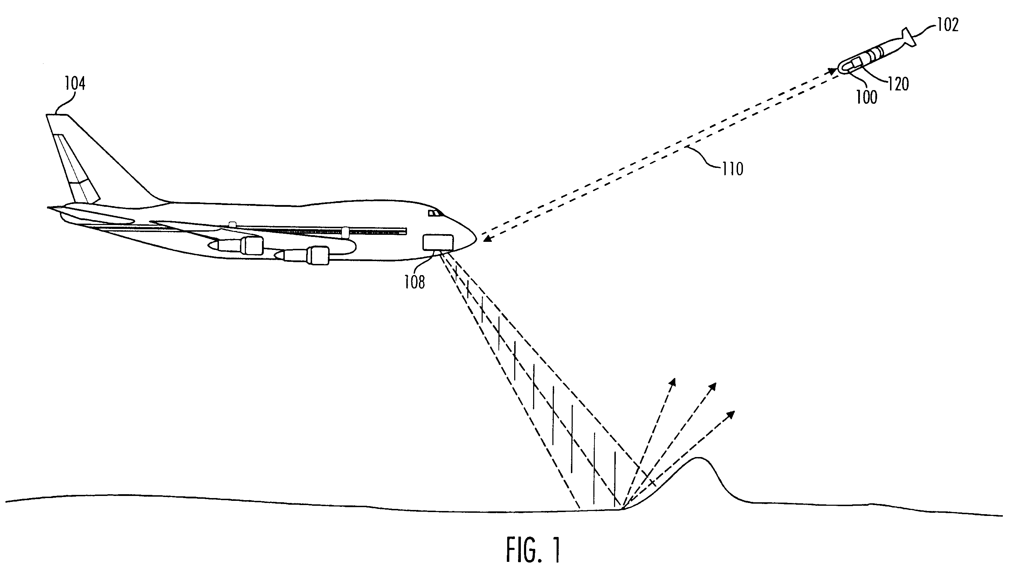

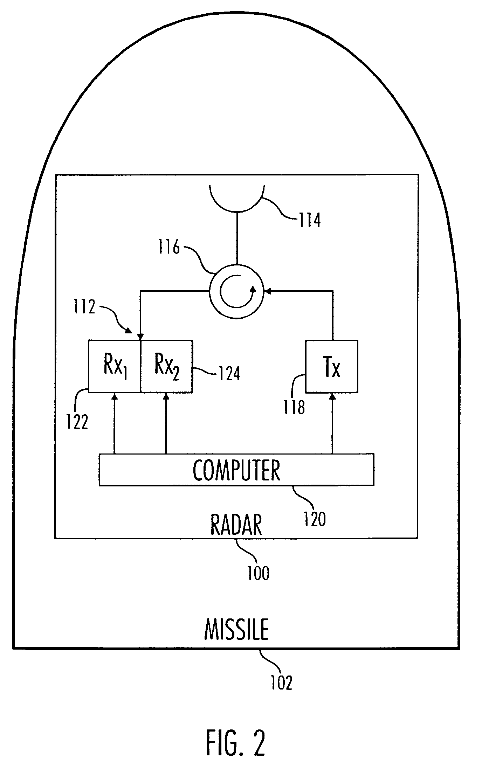

Referring to Figures 1 and 2, in a preferred embodiment of the present invention, a radar device 100 is mounted within a missile 102. The seeker radar 100 transmits electromagnetic energy having an associated polarization vector. The energy may strike the surface, or skin, of a variety of objects, including the desired target, and is then reflected off the skin. This skin return is then echoed back to the radar system to be analyzed by the radar.

A. <u>Jammer Detection</u>

Typically, terrain or ground bounce jamming is used to divert the radar-guided missile from tracking the true target, e.g., the aircraft. To be able to counter the particular type of jammer, however, the radar seeker must be able to clearly distinguish the jamming signals from the actual radar skin return, and, ultimately, must be able to distinguish between direct signal jamming and noise terrain bounce jamming. Thus, preferred embodiments of the present invention are particularly directed to a seeker which is able to quickly recognize the presence of jamming and, specifically, terrain bounce jamming (see Figure 1) to enable early detection and interception of the target.

To counter the jammer signals, the seeker must be able to distinguish between the existence of jamming and the actual radar skin return. In embodiments of the present invention, the radar considers the polarization of the signal to be jammed. To identify jamming, particular receiver and antenna arrangements are implemented via which the polarization of outgoing and incoming radar signals are compared and analyzed. Two polarizations are typically available for the jammer to counter the broadest possible number of radar missiles. One scheme is to use circular polarization and the second is to use 45 degree linear or slant polarization. Both types of polarization produce signals which present false signals to the seeker.

In a preferred embodiment illustrated in Figure 2, the present invention includes a radar system 100 which may be contained within a missile 102 or other aircraft. The radar 100 transmits electromagnetic signals 110, or radio-frequency energy, to detect possible targets or other objects. The transmitted power is generally concentrated in the direction of the target. Preferably, the transmitted signals have a vertical, horizontal, or circular polarization. Consequently, both the transmitted signals and any jamming signals are uniquely detectable and distinguishable. Although the seeker preferably transmits signals of a particular polarization, as discussed further below, the seeker can receive both horizontally and vertically polarized signals.

As shown in Figure 2, the radar system 100 includes a transmitter 118 and a receiver 112 coupled together via a circulator 116. The circulator 116, in turn, is coupled to a radar antenna 114. The seeker antenna 114 is a dual polarization antenna constructed to provide a broad area to collect the echo power of a returning wave, i.e., the radar skin return, upon contact with an object. The antenna 114 may be conventionally gimbal-mounted, or otherwise movably coupled, to the radar system at the nose of the seeker 102, as illustrated in Figure 1. The entire radar unit is preferably covered by a radome structure (not shown).

In preferred embodiments of the present invention, two receiver channels 122 and 124 are provided to enable the seeker radar 100 to receive simultaneously both horizontal and vertical polarizations. The transmitter function is unaffected. The dual polarization antenna 114 coupled to the two receiver channels 122 and 124 thus enables the transmission, detection and reception of both polarizations. By obtaining signals associated with both types of polarization vectors, the phase and amplitude characteristics of the signals received on the two channels can be analyzed.

A computer processor 120 is coupled to the receiver and transmitter assembly to process the data received from both the horizontal and vertical polarization channels 122 and 124. In preferred embodiments, the computer performs an analysis of the incoming received signals and their polarizations, and compares that data with the transmitted polarization to determine whether the received return has a polarization significantly different from that originally transmitted. According to embodiments of the present invention, measurable differences in the polarization can give an accurate indication as to whether a jammer is present. The polarization phase of the return signals thus allows a determination whether the jammer is performing terrain bounce jamming.

More particularly, it is recognized that the true radar skin return signal will have substantially the same polarization as the transmitted signal. Accordingly, the receiver 112 should be able to receive signals having the same polarization as the transmitted signals. For example, if a vertically polarized signal is transmitted, after a short time delay, the receiver will receive a vertically polarized echo. Even if the radar is slowly rotating, e.g., as in the case of a spinning missile, the majority of the expected skin return will be linearly polarized in the same orientation as the transmitted signals. Because the missile rolls very slowly with respect to the radar wave propagation rate, i.e., the speed of light, the effective roll angle is generally negligible.

Conventional jamming devices typically transmit radar jamming signals having slant polarization or circular polarization. Both types of polarization include signals having both a vertical component, as well as a horizontal component. When a jamming signal is transmitted to counter the seeker's radar, the radar receiver 112 may receive either type of signal, depending upon the particular polarization structure of the receiver. As a consequence, if the transmitted signal is vertically polarized and the received signals (the jamming and true returns) are vertically and horizontally polarized and, further, if the radar antenna is designated to receive only vertically polarized return signals, the radar system will be unable to differentiate whether the incoming echo is the true skin return or merely the vertical component of an incoming jamming signal.

Accordingly, in preferred embodiments of the present invention, the radar receiver channels receive both the return of the transmitted polarization, or co-polarization, as well as the cross-polarization. Cross-polarization defines the polarization vector which is orthogonal to the co-polarization. Effectively, therefore, the receiver can receive and distinguish signals having either horizontal or vertical polarization. Thus, if the computer 120, coupled to the receiver 112, processes the receiver data and determines that return signals having a polarization other than that transmitted are present, it will conclude that a jammer is present.

More specifically, the radar processor 120 evaluates the received signals to determine whether the antenna 114 has received cross-polarization data. As will be discussed further below, if the computer logic recognizes spurious signals having significantly varying polarization angles, or simply a polarization significantly different from that transmitted by the seeker, the computer will deduce that a jamming signal is present, and can proceed with antijamming procedures to reacquire the true skin return.

B. Terrain Bounce Detection

In addition to the initial determination that a jammer is present, embodiments of the present invention enable a seeker radar system to particularly distinguish whether the jammer is a terrain bounce jammer in contrast to a direct path jammer. As Indicated in Figure 1, terrain bounce jamming is performed by directing jamming signals toward the ground, or terrain. In general, terrain bounce jamming occurs when radar signals, regardless of polarization, are transmitted by a jammer and bounced off the ground. Consequently, it appears to the seeker radar system that the signal is being transmitted from the ground. A false target angle is thus presented to the seeker, causing it to direct itself away from the true target.

As illustrated generally in Figure 1, for example, terrain bounce jamming signals 106 may be transmitted from the true target, a low flying aircraft for example. The signals are initially associated with any type of polarization vector, e.g. horizontal or vertical. It is known, however, that the ground displays a depolarizing phenomenon; effectively, the ground tends to depolarize any signal. Because the ground terrain does not emulate a smooth surface, such as metal or glass, the signals which contact the ground are essentially depolarized so that the polarization phases of the bounced signals appear to be random. As a result, the seeker may determine that the target is represented by randomly polarized signals and conclude that they are echoed or bounced off the ground.

Thus, once the computer decides that jamming is present, it can proceed to compute the polarization phase for terrain bounce jamming recognition. In mathematical terms, the co-polarization and cross-polarization returns of a direct path signal are, respectively,

$$S1 = Ey * \cos\theta + Ex * \sin\theta + n1$$

$$S2 = -Ey * \sin\theta + Ex * \cos\theta + n2 .$$

Ex and Ey are the transmitted horizontal and vertical electrical field strength of the jammer, n1 and n2 are the thermal noise components of the two signals, and $\theta$ is the missile roll angle, where $\theta = 0$ degree corresponds to the normal antenna orientation and the polarization transmission of the seeker. In general, Ex and Ey are in phase for a linearly polarized signal, and therefore S1 and S2 are in phase, except being affected by thermal noise.

On the other hand, for terrain bounce signals, the co and cross-polarization returns become

$$\begin{bmatrix} S1 \\ S2 \end{bmatrix} = \begin{bmatrix} \cos\theta & \sin\theta \\ -\sin\theta & \cos\theta \end{bmatrix} \begin{bmatrix} vv & hv \\ vh & hh \end{bmatrix} \begin{bmatrix} Ey \\ Ex \end{bmatrix} + \begin{bmatrix} n1 \\ n2 \end{bmatrix}$$

where vv, hv, vh, and hh are the complex polarimetric scattering coefficients. In these coefficients, the first letter indicates the transmitted polarization and the second letter indicates the reflected polarization. As is evident, the amplitudes and phases of the signals are terrain dependent. Consequently, the relative phase between S1 and S2, called the polarization phase, is no longer deterministic. In contrast, the polarization phase of a direct jammer is always deterministic.

Thus, in accordance with embodiments of the present invention, depolarized terrain bounce signals may be immediately detected and recognized relative to direct path jamming signals which are typically highly polarized. To differentiate terrain bounce jamming from direct path jamming, a variety of statistical calculations using the return signal data received on the two receiver channels 122 and 124 (Figure 2) are performed by the computer. Using the mean and standard deviation characteristics of the data received on the co-polarization and cross-polarization channels, the seeker computer 120 can discriminate terrain bounce against direct path jamming.

For example, the radar system 100 typically processes many range gates, or bins. Each range gate is analogous to a particular window of time representing the range to the target. Within each range gate, multiple time samples are collected and processed by the computer 120. According to embodiments of the invention, a plurality of doppler filters are implemented for each range gate, as in most pulse doppler radars. The doppler filters compensate for the doppler shift of the received return signals in light of the relative motion of the target and the radar system, thus enabling differentiation between the target signal and the background clutter.

The computer 120 computes the phases of the signals in the two polarization channels, and generates the phase differences for each doppler filter of each range gate. The mean and standard deviation of the phase difference values are then computed for each range gate. These initial calculations are repeated for all of the range gates. After all of the range gates have been individually analyzed, the mean of all of the range gate means is determined, as well as the standard deviation of this mean. Furthermore, the mean of the individual standard deviation values Is calculated, in addition to the standard deviation of the standard deviations.

If the observed mean polarization phase is close to zero degrees, with little variance between doppler filters and range gates, the computer 120 will conclude that direct path jamming with linear polarization is occurring. If the mean polarization phase is approximately 90 degrees with small variance, then it can be determined that a direct path jammer is transmitting circularly polarized jamming signals. However, If the variance is large, the computer 120 will deduce that a terrain bounce jammer is present, regardless whether the jammer's polarization is linear or circular. According to embodiments of the present invention, it has been found that a large variance or standard deviation which is more than two to three times greater than the variance calculated for direct path jamming gives an accurate indication of the presence of terrain bounce jamming.

Thus, the standard deviation measure is a good discriminant for both linear and circular polarization jammers. Moreover, it appears that the mean of the standard deviation measure is an even better discriminant if the jammer polarization is unknown, particularly since the value of the mean of the standard deviation is insensitive to the jammer power level.

C. Detection Operation

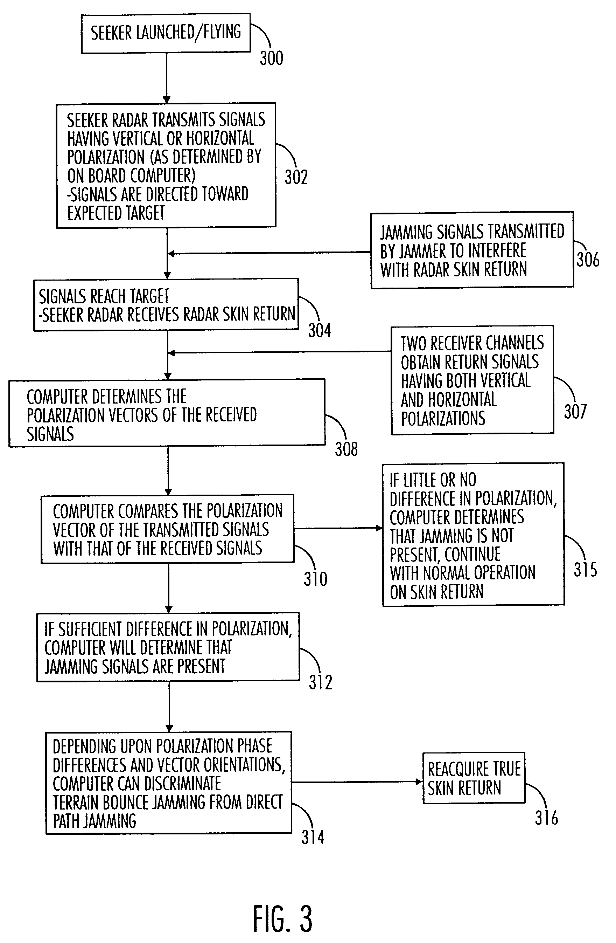

Figure 3 is a flow diagram describing the sequence of steps performed by the seeker. A jammer is typically mounted within or on a low altitude target to counter radar detection and tracking by the seeker. The jammer's function is to transmit a jamming signal toward the ground and create a false target angle to the seeker. For the seeker to complete its mission, it must therefore discover the presence of jamming and ultimately try to ignore the effects of the jamming signal. The seeker thus must effectively eliminate the jammer effect.

Referring to the embodiments shown in Figures 1 and 3, the missile seeker is launched and travels above ground. (Step 300) At step 302, which may occur simultaneously with step 300, the on-board seeker radar transmits radar signals having predetermined polarizations, e.g., vertical or horizontal. The polarization of the signals is known by the internal radar computer. When a target comes into view of the radar system, the radar signals hit the surface, or skin, of the target, causing a radar skin return to be reflected back toward the seeker radar. (Step 304) As explained briefly above, the skin return is an echo of the transmitted signal, and thus generally retains the polarization characteristics of the outgoing signal.

Concurrent with the seeker's radar transmissions, the jammer mounted on-board the target may also be transmitting jamming signals to interfere with any radar skin return signals it may unavoidably be reflecting. (Step 306) These jamming signals typically are 45 degree slant or circularly polarized to counter both linearly polarized and circularly polarized radar transmissions. As discussed above, 45 degree polarization jamming signals, for example, can effectively dupe the radar receiver into believing that its own signals having a particular polarization, are being reflected since 45 degree polarization includes both vertical and horizontal polarization components. Consequently, when the radar sees return signals from a jammer having a polarization similar to that sent out, it may mistakenly conclude that the return signals are true.

Thus, to detect the existence of both direct path jamming and terrain bounce jamming, in preferred embodiments of the present invention, an additional receiver channel 124 and dual polarization antenna 114 (Figure 2) are implemented to allow the seeker radar receiver to receive and process both types of linear polarization.

(Step 307) As indicated in step 308 of Figure 3, the computer knows the polarization vectors of the incoming signals received on both receiver channels, and compares the known polarization of the transmitted signals with that of the actually received signals. (Step 310) Accordingly, the computer expects the radar skin return to have substantially the same polarization as the transmitted signals. If the computer concludes that a signal having an unexpected polarization has been received on one of the two receiver channels, it may assume that the received signal is being sent by a jammer. (Step 312) Otherwise, normal seeker operation on the skin return is resumed. (Step 315)

Furthermore, depending upon the polarization phases of the received signals relative to the expected return, the computer can discriminate terrain bounce jamming versus direct path jamming. (Step 314) As explained above, if the received polarization phases of the skin return appear to be random, or otherwise depolarized, the computer will determine that terrain bounce jamming is occurring. Ultimately, as a result of such a jamming determination, the radar computer can proceed with anti-terrain bounce jamming algorithms and make attempts to reacquire the true skin return of the target.

Thus, it will be recognized that embodiments of the present Invention enable a radar-based seeker to immediately detect, recognize and counter both direct path and terrain bounce jamming. The described polarization scheme provides accurate indications of the presence of 45 degree slant and circular jamming signals and, when used with phase difference calculations, allows the seeker radar to clearly discriminate depolarized terrain bounce signals from a linearly or circularly polarized skin return. Consequently, the seeker is not misguided toward a false target, and may thus maintain accurate tracking of the true target or may be diverted to reacquire the true target.

It will be recognized that other types and configurations of radar systems may be employed according to embodiments of the present invention. In addition, it will be recognized that certain depolarization effects of the radar environment may affect the detection and recognition functions of the seeker. For example, the depolarization effects of a missile radome may need to be assessed.

The presently disclosed embodiments are to be considered in all respects as illustrative and not restrictive. The scope of the invention should only be limited by the appended claims, rather than the foregoing description, and all changes that come within the meaning and range of equivalency of the claims are, therefore, intended to be embraced therein.

It should be noted that the objects and advantages of the invention may be attained by means of any compatible combination(s) particularly pointed out in the items of the following summary of the invention and the appended claims.

The invention may be summarized as follows:

1. A radar system for detecting and recognizing the presence of jamming, comprising:

a transmitter for transmitting radio signals associated with a predetermined polarization vector;

a receiver having a plurality of input channels for receiving radio signals associated with a plurality of polarization vectors, wherein the plurality of input channels allows the radar system to simultaneously receive vertically and horizontally polarized signals; and

processor means for processing the received signals according to the polarizations corresponding to the plurality of input channels, wherein the processor means compares the polarizations of the received signals with the polarization of the transmitted signals, such that if a substantial amount of the received signals have a polarization other than that transmitted, the processor means determines that the signals are jamming signals transmitted by a jammer.

2. The radar system , further comprising an antenna coupled to the transmitter and receiver, the antenna for radiating and receiving radio signals.

3. The radar system wherein the antenna is a multiple-polarization antenna for receiving radio signals associated with a plurality of polarization vectors.

4. The radar system , further comprising phase calculation means coupled to the processor means for computing polarization phase differences between the plurality of receiver channels, such that if the phase differences appear to be random, the received signals may be classified as terrain bounce jamming signals.

5. A radar antijamming device for detecting and recognizing the presence of direct path and terrain bounce jamming signals sent by a jammer, the radar device operable with a computer and including a transmitter for transmitting signals associated with a polarization vector which has been predetermined by the computer, wherein the transmitted signals which are echoed back to the radar device define true radar skin return, the radar antijamming device comprising:

a dual-polarization antenna coupled to the transmitter for radiating the signals transmitted by the transmitter; and

a receiver having a co-polarization channel and a cross-polarization channel, the channels for receiving signals associated with a plurality of polarization vectors,

wherein the co-polarization channel enables the receiver to receive polarized signals corresponding to the true skin return, and the cross-polarization channel enables the receiver to receive signals associated with a polarization orthogonal to the polarization of the signals received on the co-polarization channel ,

further wherein the computer is configured to process and compare the polarizations of the signals received on the co-polarization and cross-polarization channels, called the co-polarization return and the cross-polarization return, respectively, such that if the cross-polarization return is substantially greater than the co-polarization return, the computer classifies, on the basis of the comparison of the polarizations, whether the signals are jamming signals.

6. The radar antijamming device further comprising phase evaluation means for evaluating and comparing the co-polarization return and the cross-polarization return to determine corresponding polarization phases and polarization phase differences, thereby enabling the computer to classify the received signals as terrain bounce signals.

7. The radar antijamming device wherein the co-polarization and cross-polarization returns are divided into a plurality of range bins defining estimated ranges to the jammer, such that the phase evaluation means operates on each range bin,

further wherein the phase evaluation means includes

means for computing a mean value of the polarization phase differences between the co-polarization and cross-polarization returns for each range bin,

means for computing a standard deviation of the polarization phase differences for each range bin,

means for computing a mean of the standard deviations,

means for computing a standard deviation of the standard deviations, and

means for evaluating the computed mean value of the polarization phase differences for each of the range bins and the computed mean of the standard deviations, such that

(a) if the mean polarization phase difference is approximately zero degrees and the mean of the standard deviations is small, the received signals are classified as linearly polarized direct path jamming signals,
(b) if the mean polarization phase difference is approximately 90 degrees and the mean of the standard deviations is small, the received signals are classified as circularly polarized direct path jamming signals,

(c) if the mean of the standard deviations is substantially large, the received signals are classified as terrain bounce jamming signals.

8. The radar antijamming device wherein the radar antijamming device is operable within a missile seeker.

9. The radar antijamming device wherein the radar antijamming device is mounted within an aircraft.

10. A method of detecting and distinguishing direct path jamming signals and terrain bounce jamming signals from true radar skin return signals, the method comprising the steps of:

transmitting signals associated with a polarization vector, wherein the transmitted signals which are echoed back to the radar device define the true radar skin return;

receiving signals associated with a plurality of polarization vectors via a co-polarization channel and a cross-polarization channel, wherein the co-polarization channel receives polarized signals corresponding to the true skin return, and the cross-polarization channel receives signals associated with a polarization orthogonal to the polarization of the signals received on the co-polarization channel; and

comparing the polarizations of the signals received on the co-polarization channel and the cross-polarization channel, the co-polarization return and the cross-polarization return, respectively, wherein if a substantial amount of the cross-polarization return is detected, determining that the received signals are jamming signals transmitted by a jammer.

11. The method further comprising the step of evaluating the co-polarization return and the cross-polarization return to determine corresponding polarization phase angles and the differences in the polarization phase angles between the co-polarization return and the cross-polarization return, thereby enabling the computer to classify the received signals as terrain bounce signals.

12. The method further comprising the steps of:

dividing the co-polarization and cross-polarization returns into time segments, or range bins, each time segment defining a particular period of time from signal transmission to signal reception, which further defines a particular range from transmission to reception;

evaluating the co-polarization return and the cross-polarization return for each time segment to determine corresponding polarization phase angles and the differences in the polarization phase angles between the co-polarization return and the cross-polarization return,

computing a mean value of the polarization phase angle differences for each time segment,

computing a standard deviation of the mean value,

computing a mean of the standard deviation,

computing a standard deviation of the standard deviation, and

evaluating the computed mean polarization phase angle difference and the mean of the standard deviation, such that

(a) If the mean polarization phase angle difference is approximately zero degrees and the mean of the standard deviation is small, determining that the received signals are linearly polarized direct path jamming signals,

(b) if the mean polarization phase angle difference is approximately 90 degrees and the mean of the standard deviation is small, determining that the received signals are circularly polarized direct path jamming signals,

(c) if the mean of the standard deviation is substantially large, determining that the received signals are terrain bounce jamming signals.

## Claims

1. A radar system (100) for detecting and recognizing the presence of jamming, comprising:

a transmitter (118) transmitting radio signals (110) associated with a predetermined polarization vector;

a receiver (112) having a plurality of input channels (122,124) for receiving radio signals associated with a plurality of polarization vectors, wherein the plurality of input channels allows the radar system to simultaneously receive vertically and horizontally polarized signals; and

a processor (120) for processing the received signals according to the polarizations corresponding to the plurality of input channels (122, 124), wherein the processor (120) compares the polarizations of the received signals with the polarization of the transmitted signals (110), such that if a substantial amount of the received signals have a polarization other than that transmitted, the processor (120) determines that the signals are jamming signals transmitted by a jammer (108).

2. The radar system of claim 1, further comprising an antenna (114) coupled to the transmitter (118) and receiver (112), the antenna (114) for radiating and receiving radio signals (110), wherein the antenna (114) is a multiple-polarization antenna for receiving radio signals associated with a plurality of polarization vectors.

3. The radar system of claim 1, further comprising phase calculation means coupled to the processor (120) for computing polarization phase differences between the plurality of receiver channels (122, 124), such that if the phase differences appear to be random, the received signals may be classified as terrain bounce jamming signals.

4. A radar antijamming device (100) for detecting and recognizing the presence of direct path and terrain bounce jamming signals sent by a jammer (108), the radar device (100) operable with a computer (120) and including a transmitter (118) for transmitting signals (110) associated with a polarization vector which has been predetermined by the computer (120), wherein the transmitted signals (110) which are echoed back to the radar device (100) define true radar skin return, the radar antijamming device comprising:

a dual-polarization antenna (114) coupled to the transmitter (118) for radiating the signals transmitted by the transmitter (118); and

a receiver (112) having a co-polarization channel (122) and a cross-polarization channel (124), the channels for receiving signals associated with a plurality of polarization vectors,

wherein the co-polarization channel (122) enables the receiver (112) to receive polarized signals corresponding to the true skin return, and the cross-polarization channel (124) enables the receiver (112) to receive signals associated with a polarization orthogonal to the polarization of the signals received on the co-polarization channel,

further wherein the computer (120) is configured to process and compare the polarizations of the signals received on the co-polarization and cross-polarization channels (122, 124), called the co-polarization return and the cross-polarization return, respectively, such that if the cross-polarization return is substantially greater than the co-polarization return, the computer classifies (315), on the basis of the comparison of the polarizations, whether the signals are jamming signals.

5. The radar antijamming device of claim 4 further comprising phase evaluation means for evaluating and comparing (310) the co-polarization return and the cross-polarization return to determine corresponding polarization phases and polarization phase differences, thereby enabling the computer (120) to classify the received signals as terrain bounce signals.

6. The radar antijamming device (100) of claim 5, wherein the co-polarization and cross-polarization returns are divided into a plurality of range bins defining estimated ranges to the jammer (108), such that the phase evaluation means operates on each range bin,

further wherein the phase evaluation means includes

means for computing a mean value of the polarization phase differences between the co-polarization and cross-polarization returns for each range bin,

means for computing a standard deviation of the polarization phase differences for each range bin,

means for computing a mean of the standard deviations,

means for computing a standard deviation of the standard deviations, and

means for evaluating (314) the computed mean value of the polarization phase differences for each of the range bins and the computed mean of the standard deviations, such that

    (a) if the mean polarization phase difference is approximately zero degrees and the mean of the standard deviations is small, the received signals are classified as linearly polarized direct path jamming signals,
    (b) if the mean polarization phase difference is approximately 90 degrees and the mean of the standard deviations is small, the received signals are classified as circularly polarized direct path jamming signals,
    (c) if the mean of the standard deviations is substantially large, the received signals are classified as terrain bounce jamming signals.

7. The radar antijamming device of claim 4, wherein the radar antijamming device (100) is operable within an aircraft (102).

8. A method of detecting and distinguishing direct path jamming signals and terrain bounce jamming signals from true radar skin return signals, the method comprising the steps of:

transmitting signals associated with a polarization vector (302), wherein the transmitted signals which are echoed back to the radar device define the true radar skin return (304);

receiving signals associated with a plurality of polarization vectors via a co-polarization channel and a cross-polarization channel (307), wherein the co-polarization channel receives polarized signals corresponding to the true skin return, and the cross-polarization channel receives signals associated with a polarization orthogonal to the polarization of the signals received on the co-polarization channel (307); and

comparing the polarizations of the signals received on the co-polarization channel and the cross-polarization channel (310), the co-polarization return and the cross-polarization return, respectively, wherein if a substantial amount of the cross-polarization return is detected, determining that the received signals are jamming signals transmitted by a jammer (310).

9. The method of claim 8 further comprising the step of evaluating (308) the co-polarization return and the cross-polarization return to determine corresponding polarization phase angles and the differences in the polarization phase angles between the co-polarization return and the cross-polarization return, thereby enabling the computer to classify the received signals as terrain bounce signals (314).

10. The method of claim 8 further comprising the steps of:

dividing the co-polarization and cross-polarization returns (307) into time segments, or range bins, each time segment defining a particular period of time from signal transmission to signal reception, which further defines a particular range from transmission to reception;

evaluating the co-polarization return and the cross-polarization return (310) for each time segment to determine corresponding polarization phase angles and the differences in the polarization phase angles between the co-polarization return and the cross-polarization return;

computing a mean value of the polarization phase angle differences for each time segment,

computing a standard deviation of the mean value,

computing a mean of the standard deviation,

computing a standard deviation of the standard deviation, and

evaluating (314) the computed mean polarization phase angle difference and the mean of the standard deviation, such that

    (a) if the mean polarization phase angle difference is approximately zero degrees and the mean of the standard deviation is small, determining that the received signals are linearly polarized direct path jamming signals,
    (b) if the mean polarization phase angle difference is approximately 90 degrees and the mean of the standard deviation is small, determining that the received signals are circularly polarized direct path jamming signals,
    (c) if the mean of the standard deviation is substantially large, determining that the received signals are terrain bounce jamming signals.

FIG. 1

FIG. 2

FIG. 3

European Patent
Office

**EUROPEAN SEARCH REPORT**

Application Number

EP 95 11 3993

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | US-A-5 034 750 (A. G. CARDIASMENOS) * column 1, line 5 - line 30; figure 1 * * column 6, line 11 - line 44 * --- | 1,4,8 | G01S7/36 G01S7/02 |
| Y | US-A-5 311 192 (B. B. VARGA ET AL) * column 2, line 5 - line 56; figure 2 * --- | 1,4,8 | |
| A | EP-A-0 065 499 (SELENIA INDUSTRIE ELETTRONICHE ASSOCIATE) * the whole document * --- | | |
| A | GB-A-1 359 810 (STEN OLLE HEDBERG) * page 1, line 55 - line 83; figure 1 * ----- | | |

TECHNICAL FIELDS
SEARCHED      (Int.Cl.6)

G01S
F41G

The present search report has been drawn up for all claims

| Place of search | Date of completion of the search | Examiner |
|---|---|---|
| BERLIN | 20 December 1995 | Breusing, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P04C01)